# EUROPÄISCHE PATENTSCHRIFT

(11) **EP 0 873 816 B1**
(45) Veröffentlichungstag und Bekanntmachung des Hinweises auf die Patenterteilung: **17.07.2002**
(21) Anmeldenummer: 98107224.2
(22) Anmeldetag: 21.04.1998
(51) Int. Cl.: B23Q 3/18, B23Q 3/06

(54) **Positionier-Schnellspannzylinder**
Cylinder for positioning and quick-action clamping
Cylindre pour positionnement et serrage rapide

(30) Priorität: 22.04.1997 DE 19716805
(43) Veröffentlichungstag der Anmeldung: 28.10.1998
(73) Patentinhaber: Stark Werkzeuggesellschaft mbH, 6840 Götzis (AT)
(72) Erfinder: Stark Werkzeuggesellschaft mbH, 6840 Götzis (AT)
(74) Vertreter: Bischof, Hans-Jochen, Dipl.-Ing.

(56) Entgegenhaltungen:
- WO-A-96/07505
- DE-A- 4 135 418
- US-A- 5 438 740

## Beschreibung

Gegenstand der vorliegenden Erfindung ist ein Positionier-Schnellspannzylinder nach dem Oberbegriff des Anspruchs 1 (siehe z.B. DE 41 35 418 A1).

Derartige Schnellspannzylinder und die zugehörigen Einzugsnippel weisen den wesentlichen Vorteil auf, daß die Schnellspannzylinder bzw. die Nippel in einer genau vorgegebenen, nullpunktorientierten Lage an dem Tisch einer Werkzeugmaschine befestigt werden können. Es werden dann Paletten, insbesondere Lochrasterpaletten, mit den entsprechenden zugehörigen Bauteilen versehen; diese Paletten können dann ebenfalls nullpunktorientiert gegenüber dem Maschinentisch eingespannt werden. Auf den Paletten werden ausgerichtet, also ebenfalls nullpunktorientiert, Werkstücke befestigt.

Diese Art des Einspannens hat den wesentlichen Vorteil, daß ein Nachjustieren nach dem Anbringen der Palette an dem Maschinentisch nicht mehr erfolgen muß, da durch geeignetes Ausrichten zwischen Werkstück, Palette und Einspannmitteln bereits die Lage der Werkstücke gegenüber der Maschine vollkommen feststeht.

Dieses System ist allerdings für bestimmte Einsatzfälle nicht brauchbar. Insbesondere bei der Verwendung von Lochrasterpaletten hat es sich gezeigt, daß das Lochraster für den bestimmten Anwendungsfall nicht brauchbar ist. Um dann ein zuverlässiges Spannen zu erreichen, ist es erforderlich, die an dem Maschinentisch angebrachte Befestigung umzusetzen. Dies führt zu sehr hohen Umrüstezeiten und damit zu langen Stillstandszeiten der Maschine. Die entsprechenden Einspannmittel müssen dann nämlich zuerst entfernt, anschließend in einer bestimmten, üblicherweise genau vorgegebenen Lage ausgerichtet und in diese wieder angebracht werden. Der Montage- und Justieraufwand ist entsprechend hoch.

Aufgabe der vorliegenden Erfindung ist es daher, einen Positionier-Schnellspannzylinder der eingang genannten Art dahingehend weiterzubilden, daß eine rasche und flexible Anpassung an unterschiedliche Spezialfälle erreicht werden kann.

Erfindungsgemäss wird diese Aufgabe durch die technische Lehre des Anspruchs 1 gelöst.

Wesentlich hierbei ist, daß der Positionier-Schnellspannzylinder - im folgenden lediglich als Schnellspannzylinder bezeichnet - lageorientiert an dem Zubehörteil befestigbar ist. Dieses Zubehörteil kann entweder eine Lochrasterpalette sein, ein Werkstück oder der Maschinentisch selbst.

In einer ersten Ausführungsform der Erfindung wird vorgeschlagen, zur Anpassung an verschiedene Spezialfälle die Maschine selbst völlig unberührt zu lassen. Sämtliche an dem Maschinentisch befestigte Einspannvorrichtungen - üblicherweise handelsübliche Schnellspannzylinder, die beim Anmelder erhältlich sind - können somit verbleiben; die Maschine selbst muß nicht umgerüstet werden.

Zur Bearbeitung von Spezialfällen wird dann eine erste Palette vorgesehen, deren Anschlüsse auf die des Maschinentisches abgestimmt sind. Diese erste Palette wird dann mit einem oder mehreren erfindungsgemässen Schnellspannzylindern bestückt. Diese Schnellspannzylinder sind lageorientiert auf der ersten Palette angebracht, so daß durchgehend bis zu diesen Schnellspannzylindern genau bekannt ist, in welcher Lage sie sich nach dem Befestigen an der Maschine befinden. Das nullpunkt-orientierte System wird somit gewahrt.

Diese Schnellspannzylinder können in praktisch beliebiger Lage auf der ersten Palette angebracht werden. Sie können dann zum Aufnehmen einer weiteren, zweiten Palette dienen oder direkt zur Befestigung des Werkstücks verwendet werden. Im zweiten Fall muß das Werkstück an den entsprechenden Stellen mit den geeigneten Einzugsnippeln versehen werden.

Für das Ausrichten der Schnellspannzylinder gegenüber dem Zubehörteil, insbesondere gegenüber der Lochrasterpalette, gibt es eine Reihe von Möglichkeiten.

In einer ersten Ausführungsform ist vorgesehen, den Schnellspannzylinder mit einem Ansatz zu versehen, der in eine zugehörige Bohrung der Lochrasterpalette eingreift. Dieser Ansatz kann, muß allerdings nicht zentrisch an dem Schnellspannzylinder angebracht sein. Da der Ansatz gegenüber dem Schnellspannzylinder in einer genau definierten Lage vorliegt, wird somit automatisch sichergestellt, daß die Mittellinie des Schnellspannzylinders sich ebenfalls in einer genau definierten Lage befindet. Die Befestigung des Schnellspannzylinders erfolgt in diesem Fall über Schrauben oder über sogenannte Briden, die anhand der Figurenbeschreibung noch näher erläutert werden.

In einer anderen Ausführungsform ist vorgesehen, den Schnellspannzylinder mit einem Flansch zu versehen, der über Pass-Stifte ausgerichtet wird. Diese Pass-Stifte können in vorteilhafter Ausbildung wiederum in die bereits genannten Bohrungen der Lochrasterpalette eingreifen.

Wird dieser Flansch exzentrisch ausgebildet, so kann wiederum, wie beim Vorsehen eines exzentrischen Ansatzes, durch ein Verdrehen des Schnellspannzylinders ein Verschieben von dessen Mittelpunkt, d.h. ein Verschieben des durch den Schnellspannzylinder definierten Nullpunktes, erfolgen.

Sieht man zwei ineinandergreifende Exzenter vor, die nach Art eines Flansches an dem Schnellspannzylinder angebracht sind, so lässt sich der Mittelpunkt des Schnellspannzylinders, also wiederum der Nullpunkt, innerhalb eines bestimmten Rahmens frei festlegen. Die entsprechende Voreinstellung kann erfolgen, ehe der Schnellspannzylinder an den Zubehörteilen angebracht wird.

In einer vorteilhaften Weiterbildung sämtlicher oben genannter Ausführungsformen ist vorgesehen, den Deckel des Schnellspannzylinders unrund, insbesondere in Form eines Polygons auszubilden. Der Schnellspannzylinder mit diesem besonderen Deckel kann dann dazu dienen, Bauteile nicht nur einzuziehen und zu zentrieren, sondern auch verdrehgesichert in einer genauen Winkelstellung zu halten. Dies kann entweder durch das Anlegen von Stiften an dem Schnellspannzylinder erfolgen oder durch geeignet ausgebildete Passflächen an den zugeordneten Bauteilen.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Dabei zeigt:
- Figur 1:: eine schematische Seitenansicht, teilweise im Schnitt einer ersten Ausführungsform der Erfindung,
- Figur 2:: eine vergrößerte Einzelheit aus Figur 1,
- Figur 3:: eine Ansicht nach Figur 2 in einer abgewandelten Ausführungsform,
- Figur 4:: eine Ansicht nach Figur 2 in einer weiteren Ausführungsform,
- Figur 5:: eine Draufsicht auf eine erste Befestigungsart eines erfindungsgemässen Positionier-Schnellspannzuylinders,
- Figur 6:: eine Ansicht gemäss Figur 5 mit mehreren Positionier-Schnellspannzylindern,
- Figur 7:: eine Ansicht gemäss Figur 5 auf eine abgewandelte Ausführungsform
- Figur 8:: eine Draufsicht auf einen Schnellspannzylinder mit unrundem Deckel.

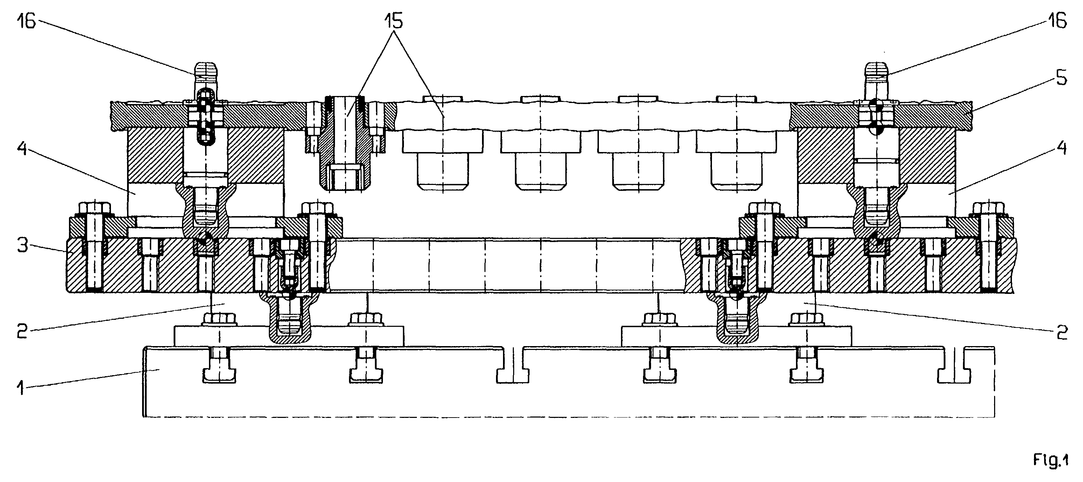

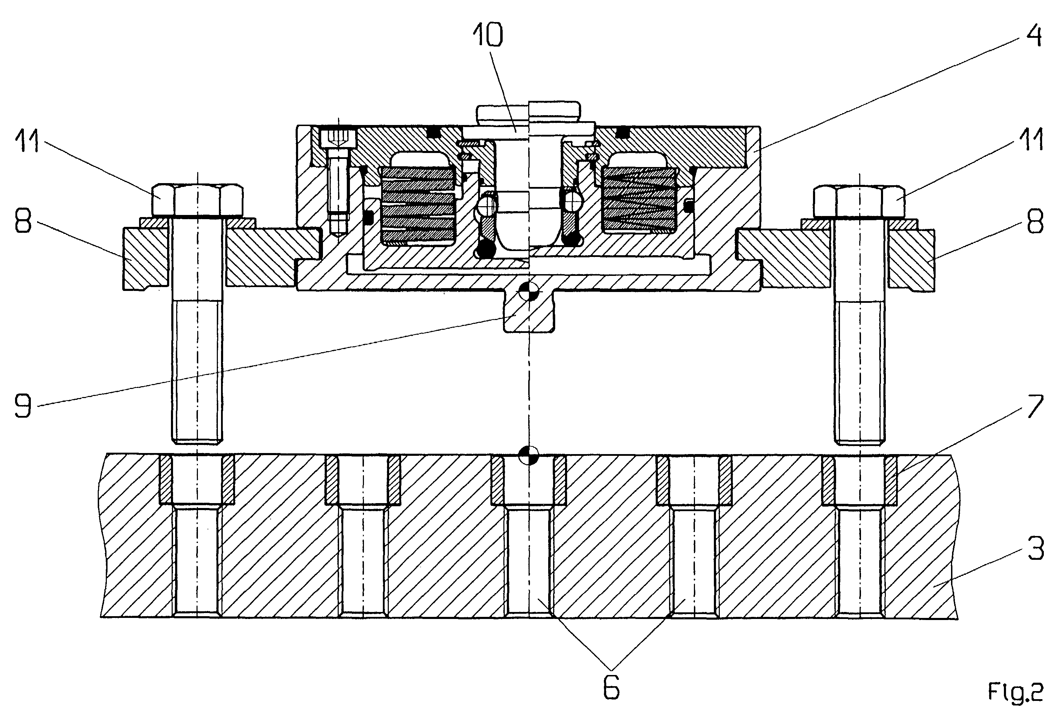

In Figur 1 ist ein Maschinentisch 1 dargestellt, der mit mehreren Schnellspannzylindern 2 versehen ist. Diese dienen zur Halterung einer Lochrasterpalette 3, die die erfindungsgemässen Schnellspannzylinder 4 trägt. An diesen ist wiederum eine Palette 5 befestigt. Die Verbindung zwischen den einzelnen Schnellspannzylindern 2,4 und den Paletten 3,5 erfolgt über Einzugsnippel, von denen ein Ausführungsbeispiel (Bezugszeichen 10) in Figur 2 dargestellt ist.

In dem Ausführungsbeispiel gemäss Figur 1 ist die obere Palette 5 mit einer Reihe von Spezialanschlüssen 15 sowie mehreren Einzugsnippeln 16 versehen. Diese Anschlüsse 15 sowie Einzugsnippel 16 dienen dazu, eines oder mehrere Werkstücke aufzunehmen, festzulegen und zu halten, die an der unteren Lochrasterpalette 3 mit dem darin vorhandenen Lochraster nicht gehalten werden können.

Figur 2 zeigt eine mögliche Ausführungsart einer Verbindung zwischen dem Schnellspannzylinder 4 und der unteren Lochrasterpalette 3. Im gezeigten Ausführungsbeispiel sind zur Befestigung zwei Briden 8 vorgesehen, die über zugehörige Schrauben 11 in die Pass-Gewinde-Bohrungen 6 der Lochrasterpalette 3 eingreifen. Diese Bohrungen 6 sind hierbei an einem Ende mit einer hochgenau gefertigten Büchse 7 versehen, wobei die Mittellinie dieser Büchsen 7 jeweils als Nullpunkt dient. Dies geht auch aus dem in Figur 2 eingefügten Nullpunkt-Symbol hervor.
Links ist der Einzugsnippel 10 eingezogen, rechts gelöst dargestellt.

Der Schnellspannzylinder 4 ist an seiner Unterseite in dem gezeigten Ausführungsbeispiel mit einem Ansatz 9 versehen. Dieser Ansatz 9 ist hier ebenfalls als auf der Nullpunkt-Linie liegend dargestellt. Der gegenüberliegende Einzugsnippel 10 liegt somit mit seiner Mittellinie ebenfalls auf der Nullpunkt-Linie und stellt daher eine nullpunkt-orientierte Befestigung eines an dem Einzugsnippel 10 befestigten Werkstücks oder anderen Bauteils sicher.

Es ist zeichnerisch nicht dargestellt, daß selbstverständlich der Ansatz 9 auch um ein genau vorgegebenes Maß gegenüber dem Einzugsnippel 10 versetzt werden kann. Auf diese Weise können auch nullpunkt-orientierte Einspannungen erfolgen, die nicht mit dem Rasterschema der Lochrasterpalette 3 übereinstimmen.

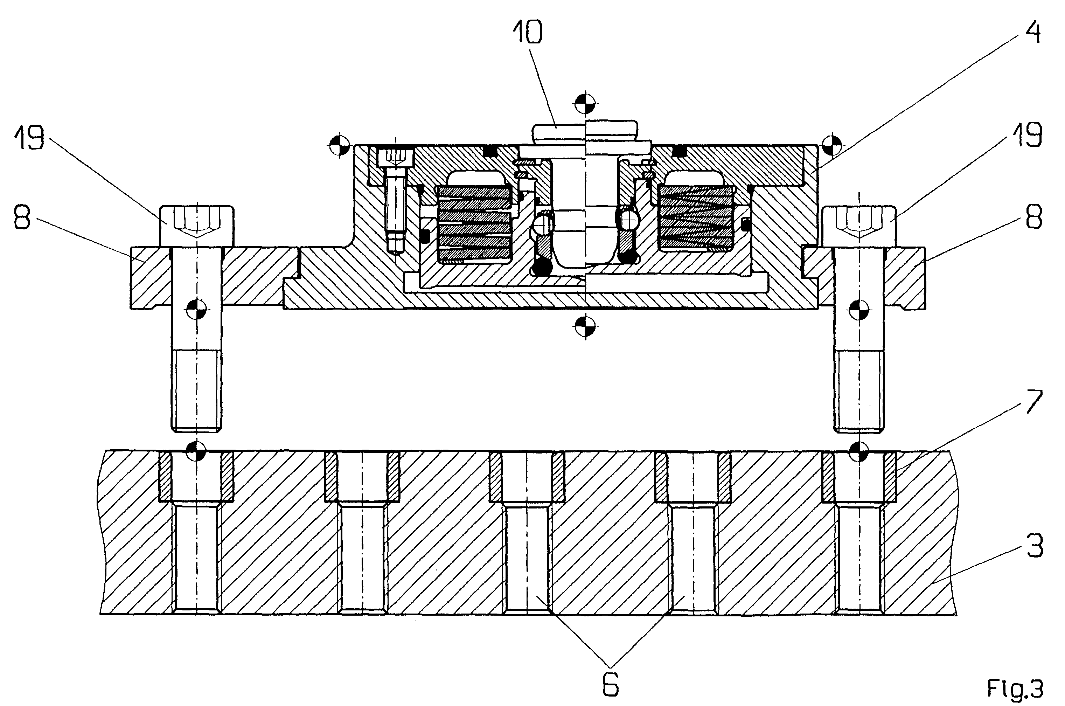

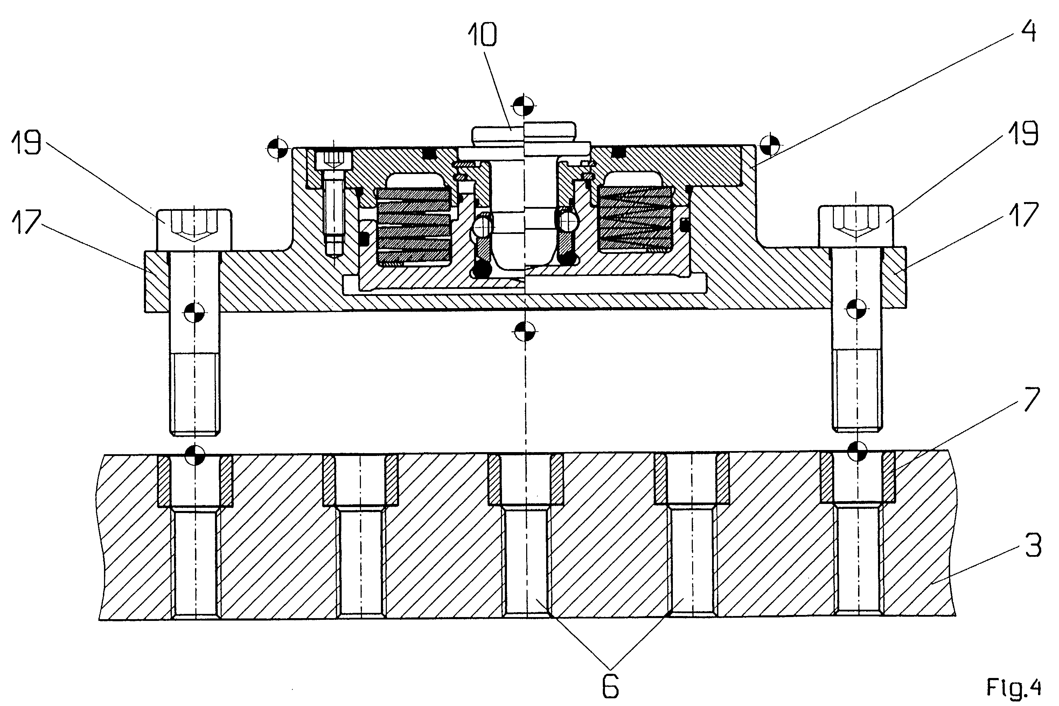

In den Ausführungsbeispielen nach den Figuren 3 und 4 sind Abwandlungen dargestellt. Fig. 3 zeigt einen exzentrischen Spannzylinder 4, der über die Anlageflächen an den Briden 8 zentriert in genau definierter lage gehalten ist. Die Briden 8 sind über Pass-Schrauben 19 in den Bohrungen 6 genau befestigt.

In der Ausführung nach Fig. 4 ist ein durchgehender Flansch 17 vorhanden; die Befestigung erfolgt wie bei Fig. 3 mittels Pass-Schrauben 19. Der Flansch 17 kann, muß aber nicht exzentrisch ausgebildet sein.

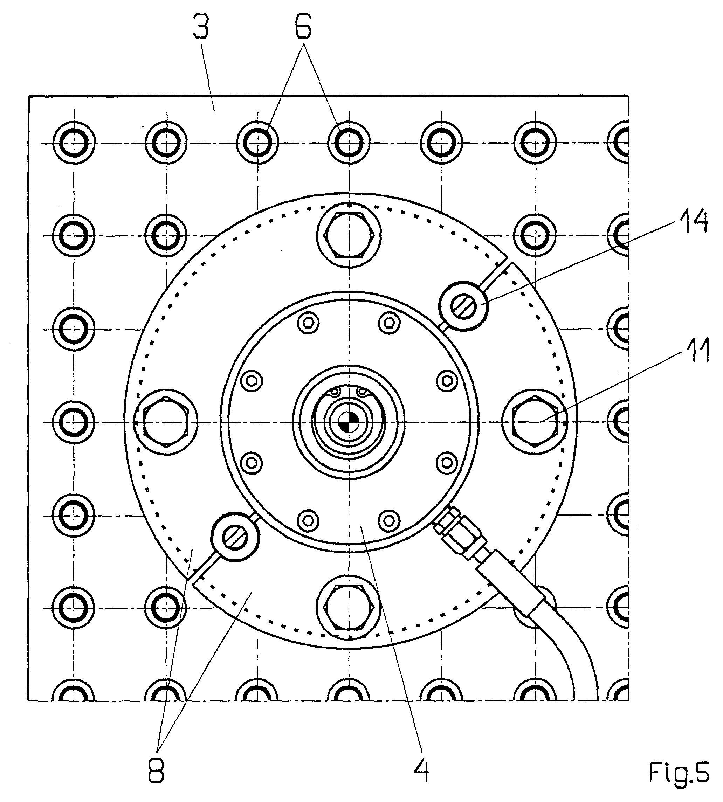

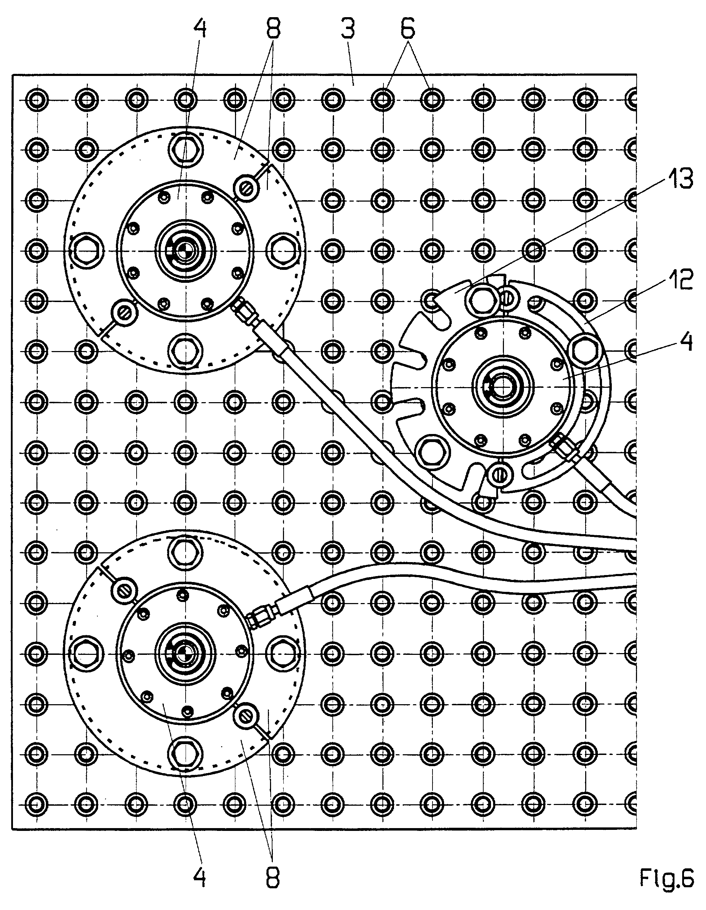

Die Figuren 5 und 6 zeigen jeweils eine Draufsicht auf einen bzw. mehrere derartige Schnellspannzylinder 4. In sämtlichen gezeigten Fällen erfolgt die Befestigung über Briden 8 bzw. 12, 13.

In Figur 5 sind zwei Briden 8 vorgesehen, die vollständig gleich ausgebildet sind. Diese Briden werden über die bereits genannten Schrauben 11 in den Bohrungen 6 der Lochrasterpalette 3 verankert. Um die Montage zu erleichtern ist vorgesehen, die beiden Briden mit entsprechenden Ansätzen zu versehen, die dann für das Anbringen von einer Scheibe 14 übergriffen werden. Wie schematisch dargestellt, erfolgt die Betätigung des Schnellspannzylinders 4 über einen Hydraulikanschluß.

In Figur 6 sind neben den Briden 8 gemäss Figur 3 noch zwei weitere Briden 12,13 dargestellt. In dieser Ausführungsform stimmt der Mittelpunkt des Schnellspannzylinders 4 nicht mehr mit dem Raster der Lochrasterpalette 3 überein; die Mittellinien liegen deutlich außerhalb dieses Rasters. Um diese Befestigung auf der Lochrasterpalette 3 zu erreichen, können entweder Briden ähnlich der Bride 12 vorgesehen sein, die mit dem dargestellten, etwa halbrunden Längsschlitz versehen sind.

Die Bride 13 weist demgegenüber mehrere Einkerbungen am Rand auf, in die entsprechende Schrauben eingreifen können. Je nach der Anbringung der Briden 12, 13 kann der Mittelpunkt des Schnellspannzylinders 4 um ein genau bestimmtes Maß gegenüber der Rasterung der Lochrasterpalette 3 versetzt werden und stellt somit nach wie vor - trotz des Versetzens - einen nullpunkt-orientierten Mittelpunkt bereit.

In den beiden anderen Ausführungsbeispieln nach Figur 6 bzw. nach Figur 5 fällt der Mittelpunkt des Schnellspannzylinders 4 mit der Rasterung der Palette 3 zusammen.

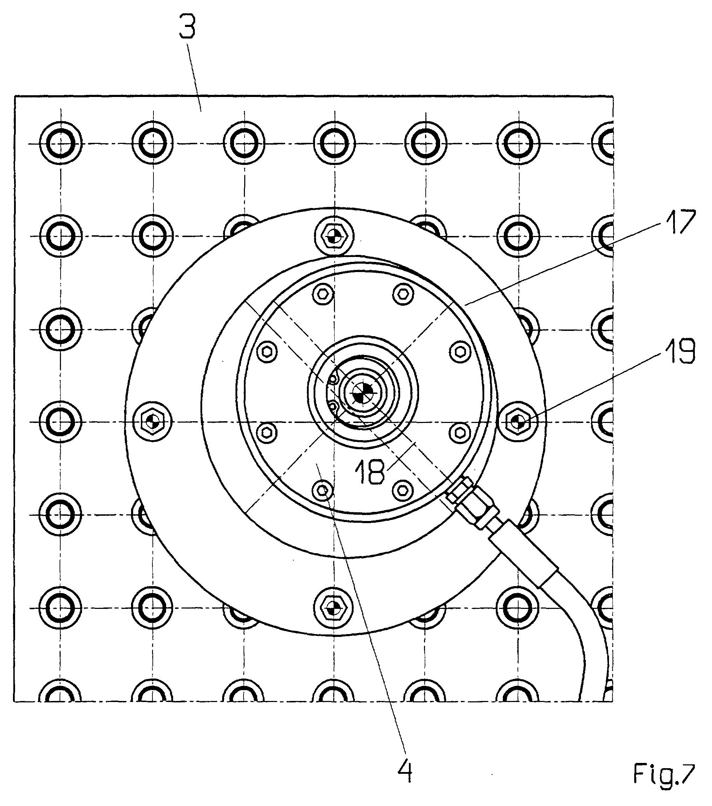

Figur 7 zeigt eine weitere Ausführungsform. Hier ist der Schnellspannzylinder 4 mit einem exzentrischen Flansch 17 versehen; die Exzentrizität ist mit Bezugszeichen 18 angedeutet.

Der Flansch 17 wird hierbei über mehrere Pass-Schrauben 19 in zugeordneten Bohrungen 6 der Lochrasterpalette 3 aufgenommen und befestigt. Auch in diesem Ausführungsbeispiel ist der Mittelpunkt des Schnellspannzylinders 4 gegenüber der nur schematisch angedeuteten Rasterung der Palette 3 versetzt, allerdings wieder um ein genau bestimmtes Maß.

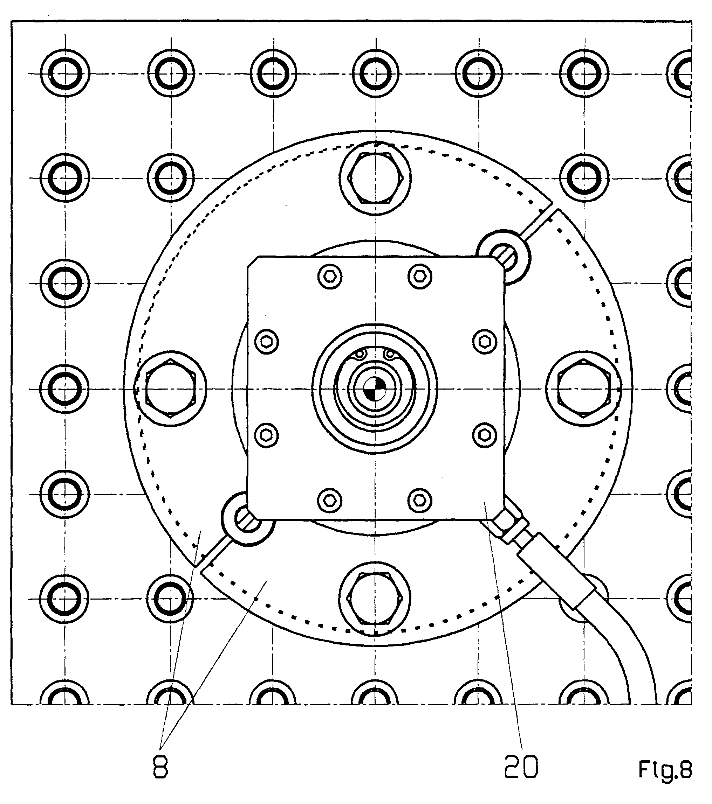

Figur 8 zeigt eine besondere Weiterbildung eines derartigen Schnellspannzylinders 4. In den bisher gezeigten Ausführungsformen ist der Deckel dieses Schnellspannzylinders 4 stets im wesentlichen rund gewesen. Figur 8 zeigt einen praktisch quadratischen Deckel 20.

Ein derartiger Deckel kann stets dann zum Einsatz kommen, wenn für die Befestigung eines Werkstücks oder eines anderen Teils nicht mehrere Schnellspannzylinder 4 (wie in Figur 6 gezeigt) zum Einsatz kommen, sondern lediglich ein einziger. Werden mehrere derartige Schnellspannzylinder 4 verwendet, so ist eine Verdrehsicherung des Bauteils nicht mehr erforderlich. Wird allerdings nur ein einziger Schnellspannzylinder verwendet, so kann über den quadratischen Deckel 20 eine Verdrehung des Bauteils ausgeschlossen werden. Das Bauteil kann hierzu entweder mit Stiften versehen sein, die sich an einer der Seitenkanten anlegen, oder es weist eine entsprechende Ausfräsung, die von der Form her angepasst ist, auf.

Es ist selbstverständlich nicht erforderlich, die erfindungsgemässen Schnellspannzylinder 4 unbedingt zwingend an einer Lochrasterpalette zu befestigen. Sie können ebenso gut direkt an dem Werkstück befestigt werden, wobei dann die zum Anbringen an der Werkzeugmaschine befestigte Palette mit zugeordneten Einzugsnippeln versehen werden muß.

Falls entsprechend hohe Stückzahlen für die Anfertigung erforderlich sind, ist es darüber hinaus ebenfalls möglich, die entsprechenden Bohrungen für den Ansatz des Schnellspannzylinders direkt in dem Tisch 1 der Maschine anzubringen. Die Bohrungen sind dann mit höchster Genauigkeit, nämlich mit der Genauigkeit der Maschine selbst, gefertigt. Die Zylinder selbst können ebenfalls praktisch mit Maschinengenauigkeit gefertigt werden, so daß sich eine extrem genaue Einspannung ergibt.

Insgesamt ergibt sich mit dem Gegenstand der vorliegenden Erfindung eine sehr viel höhere Flexibilität bei der Anpassung an schwierige Randbedingungen.

### Zeichnungs-Legende

- 1: Maschinentisch
- 2: Schnellspannzylinder
- 3: Lochrasterpalette
- 4: Schnellspannzylinder
- 5: Palette
- 6: Pass-Gewinde-Bohrung
- 7: Büchse
- 8: Bride
- 9: Ansatz
- 10: Einzugsnippel
- 11: Schraube
- 12: Bride
- 13: "
- 14: Scheibe
- 15: Spezialanschluß
- 16: Einzugsnippel
- 17: Flansch
- 18: Exzentrizität
- 19: Pass-Schraube
- 20: Deckel

## Patentansprüche

1. Positionier-Schnellspannzylinder zum Zentrieren und Einziehen eines Einzugsnippels, **dadurch gekennzeichnet, daß** der Schnellspannzylinder (4) mit Mitteln zur lageorientierten Befestigung an einem Zubehörteil (3) versehen ist.

2. Positionier-Schnellspannzylinder nach Anspruch 1, **dadurch gekennzeichnet, daß** der Schnellspannzylinder (4) mit einem Ansatz (9) zum Eingreifen und Zentrieren in einer ausgerichteten Bohrung (6) versehen ist.

3. Positicnier-Schnellspannzylinder nach Anspruch 1 oder 2, **dadurch gekennzeichnet, daß** der Schnellspannzylinder (4) mit einem Flansch (17) versehen ist, der gegenüber dem Zubehörteil (3) mittels Pass-Stiften (19) ausgerichtet ist.

4. Positionier-Schnellspannzylinder nach Anspruch 3, **dadurch gekennzeichnet, daß** der Flansch (17) und die Pass-Stifte (19) mit einer Exzentrizität (18) gegenüber dem Schnellspannzylinder (4) ausgebildet sind.

5. Positionier-Schnellspannzylinder nach einem der vorhergehenden Ansprüche, **dadurch gekennzeichnet, daß** der Deckel (20) des Schnellspannzylinders (4) unrund ausgebildet ist.

6. Positionier-Schnellspannzylinder nach einem der vorhergehenden Ansprüche, **dadurch gekennzeichnet, daß** eine Befestigung des Schnellspannzylinders (4) an einer Lochrasterpalette (3), einem Maschinentisch (1) oder einem Werkstück erfolgt.

## Claims

1. Positioning quick-action clamping cylinder for centring and drawing-in a pull-in fitting, **characterised in that** the quick-action clamping cylinder (4) is provided with means for position-oriented attachment on an accessory part (3).

2. Positioning quick-action clamping cylinder according to Claim 1, **characterised in that** the quick-action clamping cylinder (4) is provided with a projection (9) for engagement and centring in an oriented bore (6).

3. Positioning quick-action clamping cylinder according to Claim 1 or 2, **characterised in that** the quick-action clamping cylinder (4) is provided with a flange (17) oriented relative to said accessory part (3) by means of dowel pins (19).

4. Positioning quick-action clamping cylinder according to Claim 3, **characterised in that** said flange (17) and said dowel pins (19) are configured to present eccentricity relative to the quick-action clamping cylinder (4).

5. Positioning quick-action clamping cylinder according to any of the preceding Claims, **characterised in that** the top (20) of the quick-action clamping cylinder (4) has a noncircular configuration.

6. Positioning quick-action clamping cylinder according to any of the preceding Claims, **characterised in that** the attachment of the quick-action clamping cylinder (4) is realised on a breadboard-type pallet (3), a supporting table (1) or on a work piece.

## Revendications

1. Cylindre de serrage de positionnement à action rapide pour le centrage et l'entrée d'un nipple d'entrée, **caractérisé en ce que** le cylindre de serrage de positionnement (4) est muni de moyens de fixation à orientation par position à une pièce accessoire (3).

2. Cylindre de serrage de positionnement à action rapide selon la revendication 1, **caractérisé en ce que** le cylindre de serrage de positionnement (4) est muni d'un bout (9) pour la prise et le centrage dans un alésage orienté (6).

3. Cylindre de serrage de positionnement à action rapide selon la revendication 1 ou 2, **caractérisé en ce que** le cylindre de serrage de positionnement (4) est muni d'une aile (17) orientée relativement à ladite pièce accessoire (3) moyennant des goujons d'assemblage (19).

4. Cylindre de serrage de positionnement à action rapide selon la revendication 3, **caractérisé en ce que** ladite aile (17) et lesdits goujons d'assemblage (19) sont conçus de façon à présenter une excentricité relative au cylindre de serrage de positionnement (4).

5. Cylindre de serrage de positionnement à action rapide selon une quelconque des revendications, **caractérisé en ce que** le chapeau (20) du cylindre de serrage de positionnement (4) a une configuration non circulaire.

6. Cylindre de serrage de positionnement à action rapide selon une quelconque des revendications, **caractérisé en ce que** l'attache du cylindre de serrage de positionnement (4) se fait sur une palette à panneau pour montage expérimental (3), une table de machine-outil (1) ou une pièce d'oeuvre.
